# EUROPEAN PATENT APPLICATION

(11) **EP 3 982 628 A1**
(43) Date of publication of application: **13.04.2022**
(21) Application number: 20200726.6
(22) Date of filing: 08.10.2020
(51) Int. Cl.: H04N 5/46, H04N 21/426, H04N 5/64

(54) **USER FRIENDLY TV SIGNAL PROCESSING UNIT**

(71) Applicant: Vestel Elektronik Sanayi ve Ticaret A.S., 45030 Manisa (TR)
(72) Inventor: CANDAN, Murat, 45030 Manisa (TR); AKDEMIR, Onur, 45030 Manisa (TR)
(74) Representative: Kehl, Ascherl, Liebhoff & Ettmayr Patentanwälte Partnerschaft mbB

(57) **Abstract**

The present invention refers to a TV signal processing unit (1). Said TV signal processing unit (1) comprises at least an input port (2) for connecting a cable (4) for inputting TV signals,
a first TV signal type processing unit (6) for processing TV signals of a first frequency range and for outputting said processed TV signals of the first frequency range as a first type of processed signals
a second TV signal type processing unit (8) for processing TV signals of a second frequency range and for outputting said processed TV signals of the second frequency range as a second type of processed signals
a front-end switching unit (10), wherein the front-end switching unit (10) comprises a first band pass filter element (12) for filtering TV signals of the first frequency range and a second band pass filter element (14) for filtering TV signals of the second frequency range and a switching module (16) for routing the TV Signals of the first frequency range from the first band pass filter element (12) to the first TV signal type processing unit (6) and for routing the TV Signals of the second frequency range from the second band pass filter element (14) to the second TV signal type processing unit (8),
and
a system-on-a-chip unit (SoC unit) (22), for demodulating the first type of processed TV signals and for demodulating the second type of processed TV signals and for outputting demodulated TV signals based on the demodulated first type of processed TV signals or for outputting demodulated TV signals based on the demodulated second type of processed TV signals.

## Description

The present invention refers to a TV signal processing unit according to claim 1, a TV according to claim 9, a set-top box according to claim 10, a method for operating a TV signal processing unit according to claim 10 and a computer program product according to claim 15.

### BACKGROUND OF THE INVENTION

Document CN108282628A discloses a television main board, a television main board component and a digital television. The television main board comprises a processing circuit, and a first interface group and a second interface group for the connection of a high-frequency head; wherein the first interface group supports a first type of television systems, and the first type of television systems comprises the DVB-S and DVB-S2 type television systems; the second interface group supports a second type of television systems; the second type of television systems are different from the first type of television systems. The main board can be compatible with the DVB-S/S2 television systems and other types of television systems simultaneously. The television main board is connected with the high-frequency head through a socket, therefore, the flexibility in the production process of the television main board can be effectively improved without increasing the spatial layout of the television main board; moreover, the tariff costs of the product in the export process are reduced, and the production costs are reduced.

Document US8237869B2 discloses a multi-standard single-chip receiver for digital demodulation of TV signals broadcasted over any of multiple digital television means, e.g., satellite, cable and terrestrial, is provided. The receiver can receive and demodulate a variety of different signal types received from one or more up-front tuners. A demodulator architecture is optimized to re-use common demodulation processing blocks for the different incoming signal types.

Document KR20040003409A discloses a digital tuner employing a demodulation chip capable of receiving ground wave broadcasting signals and cable broadcasting signals to simultaneously receive both the ground wave broadcasting signals and cable broadcasting signals through a single digital tuner, thereby reducing the volume of the digital tuner. A digital tuner employing a demodulation chip includes an RF amplifier for amplifying an input RF signal, an IF amplifier for amplifying an input IF signal, and a tuner demodulator for demodulating the input IF signal to output a broadcasting signal. The tuner demodulator includes a QAM IC, an OFDM IC, first, second and third switches. The QAM IC demodulates the IF signal inputted from the IF amplifier to output a cable broadcasting signal through a plurality of output ports. The OFDM IC demodulates the IF signal received from the IF amplifier to output a ground wave broadcasting signal through the output ports of the QAM IC. The first switch selectively applies power to the QAM IC and OFDM IC to operate the ICs. The second switch selectively applies an RF AGC signal output from the QAM IC or OFDM IC to the RF amplifier. The third switch selectively supplies an IF AGC signal output from the QAM IC or OFDM IC to the IF amplifier.

There are two type of connectors for DVBS and DVBT on TV main boards respectively. To connect them, two different sockets on mainboards are required, thus the overall TV main board is very complex and therefore expensive. To take a signal from source in the prior art two different source sockets for both DVBS and DVBT have to be used. Furthermore, we have to use two different cable for connection the desired signal for broadcasting. The use of this extra connectors and cables will create costs at every stage of production like craftsmanship, assembly, stock, material supply, design and cost up for the manufacturer. Moreover, the additional cost generated by this extra connectors directly affects the sales figures. This cost for manufacturer and also extra bill for the users.

### OBJECT OF THE INVENTION

Thus, it is an object of the present invention to provide an enhanced TV signal processing unit, a TV, a set-top box, a method for operating a TV signal processing unit and a computer program product.

It is a further object of the present invention to provide a less complex and/or more user-friendly TV signal processing unit, TV and/or set-top box.

### DESCRIPTION OF THE INVENTION

The before mentioned object is solved by a TV signal processing unit according to claim 1. Said TV signal processing unit preferably comprises at least an input port for connecting a cable for inputting TV signals, wherein the input port is configured to input TV signals of a first TV signal type and a second TV signal type, wherein the first TV signal type defines TV signal within a first frequency range, wherein the second TV signal type defines TV signal within a second frequency range, wherein the first frequency range and the second frequency range differ from each other. The TV signal processing unit preferably also comprises a first TV signal type processing unit for processing TV signals of the first frequency range and for outputting said processed TV signals of the first frequency range as a first type of processed signals and a second TV signal type processing unit for processing TV signals of the second frequency range and for outputting said processed TV signals of the second frequency range as a second type of processed signals. The TV signal processing unit preferably also comprises a front-end switching unit, wherein the front-end switching unit comprises a first band pass filter element for filtering TV signals of the first frequency range and a second band pass filter element for filtering TV signals of the second frequency range. The first band pass filter element and the second band pass filter element are preferably both connected to the input port, in particularly directly connected to the input port. The front-end switching unit preferably also comprises a switching module for routing the TV Signals of the first frequency range from the first band pass filter element to the first TV signal type processing unit and for routing the TV Signals of the second frequency range from the second band pass filter element to the second TV signal type processing unit. The switching module preferably comprises a switching element for selectively routing the TV Signals of the first frequency range from the first band pass filter element to the first TV signal type processing unit or for routing the TV Signals of the second frequency range from the second band pass filter element to the second TV signal type processing unit. The switching element is preferably operatable in dependency of defined parameters, in particularly at least indirectly in dependency of commands inputted via a remote control. The TV signal processing unit preferably also comprises a system-on-a-chip unit (SoC unit) for demodulating the first type of processed TV signals and for demodulating the second type of processed TV signals and for outputting demodulated TV signals based on the demodulated first type of processed TV signals or for outputting demodulated TV signals based on the demodulated second type of processed TV signals.

This solution is beneficial since via one input port signals belonging to multiple signal sources can be inputted in the TV signal processing unit. This leads to reduced manufacturer costs, reduce user costs, time saving for craftmanship, an easier design and a user-friendly application. Furthermore, new generation connector type like type-c can be used which offer enhanced functionality.

Thus, the invention discloses a digital video broadcast (DVB) connection system, which is having only one input port, in particularly an usb type-c socket, on TV main board for two signal sources, in particularly DVBS and DVBT. In case of usb type-c cable both sides of the cable preferably have type-c header and outlet side preferably has only one type-c socket. The front-end switch unit determines the signal (which kinds of signal it is) and manipulates the signal for related circuit for broadcasting. In addition, different TV signals, like DVBT and DVBS signals, are waiting on outlet side with using e.g. usb type-c pinning for each and the signals are carried preferably with a cable to the mainboard. Therefore, the signal source is preferably selected by a user by using TV software menu, wherein sources are added to the menus representing e.g. DVBT and DVBS, on user selection menu.

Further preferred embodiments are described in the following specification and/or by the dependent claims.

The first TV signal type processing unit is according to a preferred embodiment of the present invention a DVBT unit or DVBC unit. The second TV signal type processing unit is a DVBS unit or DVBC unit. This embodiment is beneficial since TV signals of two or three or more than two differing sources can be inserted respectively inputted via one input port.

According to a further preferred embodiment of the present invention the first frequency range is between 400MHz and 800MHz, in particularly between 474MHz and 786MHz, and the second frequency range is between 850MHz and 2250MHz, in particularly between 950MHz and 2150MHz. This embodiment is beneficial since a broad range of signals is covered by each TV signal type processing unit.

The SoC unit and the front-end switching unit communicate according to a further preferred embodiment of the present invention with each other by I2C protocol. This embodiment is beneficial since the I2C protocol is very reliable.

The switching module has according to a further preferred embodiment of the present invention three states, wherein a first state is a state in which signals outputted by the first band pass filter element can be forwarded to the first TV signal type processing unit, wherein a second state is an idle state and wherein a third state is a state in which signals outputted by the second band pass filter element can be forwarded to the second TV signal type processing unit. However, it is alternatively possible that the switching module has only two states, wherein a first state is a state in which signals outputted by the first band pass filter element can be forwarded to the first TV signal type processing unit and wherein a second state is a state in which signals outputted by the second band pass filter element can be forwarded to the second TV signal type processing unit. This embodiment is beneficial since the filtered signals can be routed to the respective TV signal type processing unit. The switching module preferably comprises at least or exactly two band pass filter elements, in particularly three or exactly three or up to three band pass filter elements.

The front-end switching unit comprises according to a further preferred embodiment of the present invention a signal input element for inputting signals representing switching commands for establishing the first state or the second state. The signal input element can be in signal communication with a remote-control signal receiver and/or in signal communication with a processor unit which processes signals provided by a remote control.

The input port, the front-end switching unit, the first TV signal type processing unit and the second TV signal type processing unit and the SoC unit are according to a further preferred embodiment of the present invention arranged and/or generated on one mainboard or as parts of one mainboard. This embodiment is beneficial since the complexity of the mainboard is relatively low compared to the prior art.

The input port is according to a further preferred embodiment of the present invention exactly one USB c-type input port for connecting to a USB c-type cable, wherein the first TV signal type and the second TV signal type are both insertable via the one USB c-type input port. The mentioned usb type-c connection network is preferably a reversible usb type-c connector which makes plug insertion more user friendly. The technology offers a single platform connector carrying all the necessary broadcast data by using only one usb type-c cable. Therefore, one socket is preferably designed by using e.g. usb type-c connector on mainboard instead of two different sockets. However, instead of usb type-c connector a different connector, like usb micro-b connector can be used. Furthermore, only one outlet e.g. with usb type-c socket, is provided for transmitting the signal sources.

Also, the present invention can refer to a new coax cable type and/or outlet type for DVBS and DVBT. Both sides of the cable will preferably have usb type-c header and outlet side will e.g. have only one usb type-c socket. Thus, only one connector, in particularly usb type-c connector, is required on main board.

Also, according to the invention the usb type-c connection system is using both motherboard of the TV and outlets. A new coax cable type for DVBS and DVBT can be designed by using usb type-c cable. USB type-c connectors and cables are widely used in our daily life so it is very advantages for users.

It is alternatively possible that a lightning cable can be used instead of a usb type-c cable. In

It is alternatively possible that the input port is a wireless input port, in particularly a Bluetooth or WLAN port. Thus, it is possible that the TV signals reach the TV signal processing unit wirelessly.

The above-mentioned object is also solved by a TV according to claim 9. The TV according to claim 9 preferably comprises a TV signal processing unit according to any of claims 1 to 8, wherein the TV further comprises a display, wherein the display is operatable in dependency of the demodulated TV signals based on the demodulated first type of processed TV signals or in dependency of the demodulated TV signals based on the demodulated second type of processed TV signals.

This solution is beneficial since TVs can be manufactured cheaper and since a TV according to the present invention is more user friendly.

The above-mentioned object is also solved by a set-top box according to claim 10. The set-top box according to claim 10 preferably comprises a TV signal processing unit according to any of claims 1 to 8, wherein the set-top box further comprises at least one output port for connecting to a TV, wherein demodulated TV signals based on the demodulated first type of processed TV signals or demodulated TV signals based on the demodulated second type of processed TV signals are outputtable via the at least one output port.

This solution is beneficial since set-top boxes can be manufactured cheaper and since a set-top box according to the present invention is more user friendly.

The above-mentioned object is also solved by a method for operating a TV signal processing unit. The method for operating a TV signal processing unit preferably comprises at least the steps: Inputting TV signals of a first TV signal type and/or a second TV signal type via an input port into the TV signal processing unit, wherein the first TV signal type defines TV signal within a first frequency range, wherein the second TV signal type defines TV signal within a second frequency range, wherein the first frequency range and the second frequency range differ from each other. Furthermore, the method preferably comprises the step of processing TV signals of the first frequency range by means of a first TV signal type processing unit and preferably also the step of outputting said processed TV signals of the first frequency range as a first type of processed signals by means of the first TV signal type processing unit. Alternatively, the present method comprises the step of processing TV signals of the second frequency range by means of a second TV signal type processing unit and preferably the step of outputting said processed TV signals of the second frequency range as a second type of processed signals by means of the second TV signal type processing unit. Additionally, the method according to the present invention preferably comprises the step of filtering TV signals of the first frequency range by means of a first band pass filter element and/or filtering TV signals of the second frequency range by means of a second band pass filter element. Additionally, the method according to the present invention preferably comprises the step of routing the TV Signals of the first frequency range from the first band pass filter element to the first TV signal type processing unit or the step of routing the TV Signals of the second frequency range from the second band pass filter element to the second TV signal type processing unit. Additionally, or alternatively the method of the present invention comprises a step of demodulating the first type of processed TV signals or a step of demodulating the second type of processed TV signals. Additionally, or alternatively the method of the present invention comprises a step of outputting demodulated TV signals based on the demodulated first type of processed TV signals or a step of outputting demodulated TV signals based on the demodulated second type of processed TV signals.

The above-mentioned object is also solved by a method for operating a TV signal processing unit according to claim 11. The method for operating a TV signal processing unit preferably comprises at least the steps: Inputting TV signals of a first TV signal type and/or a second TV signal type via an input port into the TV signal processing unit, wherein the first TV signal type defines TV signal within a first frequency range, wherein the second TV signal type defines TV signal within a second frequency range, wherein the first frequency range and the second frequency range differ from each other. Additionally, the method preferably comprises the step of filtering TV signals of the first frequency range by means of a first band pass filter element and/or the step of filtering TV signals of the second frequency range by means of a second band pass filter element. Additionally, the method preferably comprises the step of routing the TV Signals of the first frequency range from the first band pass filter element to a first TV signal type processing unit. Additionally, the method preferably comprises the step of processing TV signals of the first frequency range by means of the first TV signal type processing unit and preferably the step of outputting said processed TV signals of the first frequency range as a first type of processed signals by means of the first TV signal type processing unit. Additionally, the method preferably comprises the step of demodulating the first type of processed TV signals and preferably the step of outputting demodulated TV signals based on the demodulated first type of processed TV signals.

The above-mentioned object is also solved by a method for operating a TV signal processing unit according to claim 12. The method for operating a TV signal processing unit preferably comprises at least the steps: Inputting TV signals of a first TV signal type and/or a second TV signal type via an input port into the TV signal processing unit, wherein the first TV signal type defines TV signal within a first frequency range, wherein the second TV signal type defines TV signal within a second frequency range, wherein the first frequency range and the second frequency range differ from each other. Additionally, the method preferably comprises the step of filtering TV signals of the first frequency range by means of a first band pass filter element and/or the step of filtering TV signals of the second frequency range by means of a second band pass filter element. Additionally, the method preferably comprises the step of routing the TV Signals of the second frequency range from the second band pass filter element to a second TV signal type processing unit. Additionally, the method preferably comprises the step of processing TV signals of the second frequency range by means of the second TV signal type processing unit and the step of outputting said processed TV signals of the second frequency range as a second type of processed signals by means of the second TV signal type processing unit. Additionally, the method preferably comprises the step of demodulating the second type of processed TV signals and the step of outputting demodulated TV signals based on the demodulated second type of processed TV signals.

According to a further preferred embodiment of the present invention the method comprises a step of generating signals representing a user input. The signals preferably represent channel switching commands and/or source switching commands. A front-end switching unit preferably switches in dependency of the channel switching commands and/or source switching commands between two routing schemes. According to a preferred first routing scheme the TV Signals of the first frequency range are routed from a first band pass filter element to a first TV signal type processing unit and according to a preferred second routing scheme the TV Signals of the second frequency range are routed from a second band pass filter element to a second TV signal type processing unit. This embodiment is beneficial since the end user comfort is high, since the user can perform channel or source switching operations by means of one remote control. Thus, the generated signals representing the user input are preferably generated by means of a remote control.

The above-mentioned object is also solved by a computer program product according to claim 15. The computer program product comprising commands which cause TV signal processing unit according to claim 1 or the TV according to claim 9 or the set-top box according to claim 10 to execute the method steps according to claim 11 or 12.

Further benefits, goals and features of the present invention will be described by the following specification of the attached figure, in which exemplarily components of the invention are illustrated. Components of the device or system and methods according to the invention, which match at least essentially with respect to their function can be marked with the same reference sign, wherein such components do not have to be marked or described multiple times with respect to said figures. In the following the invention is just exemplarily described with respect to the attached figures.

### BRIEF DESCRIPTION OF THE DRAWINGS

For a more complete understanding of the present invention and advantages thereof, reference is now made to the following description taken in conjunction with the accompanying drawings. The invention is explained in more detail below using an exemplary embodiment which is specified in the schematic figures of the drawings, in which:
- Fig. 1: shows schematically an example of a TV signal processing unit,
- Fig. 2: shows schematically an example of a front-end switching unit of the TV signal processing unit,
- Fig. 3a: shows schematically an example of a TV,
- Fig. 4: shows schematically an example of a set-top box comprising a TV signal processing unit according to the present invention.

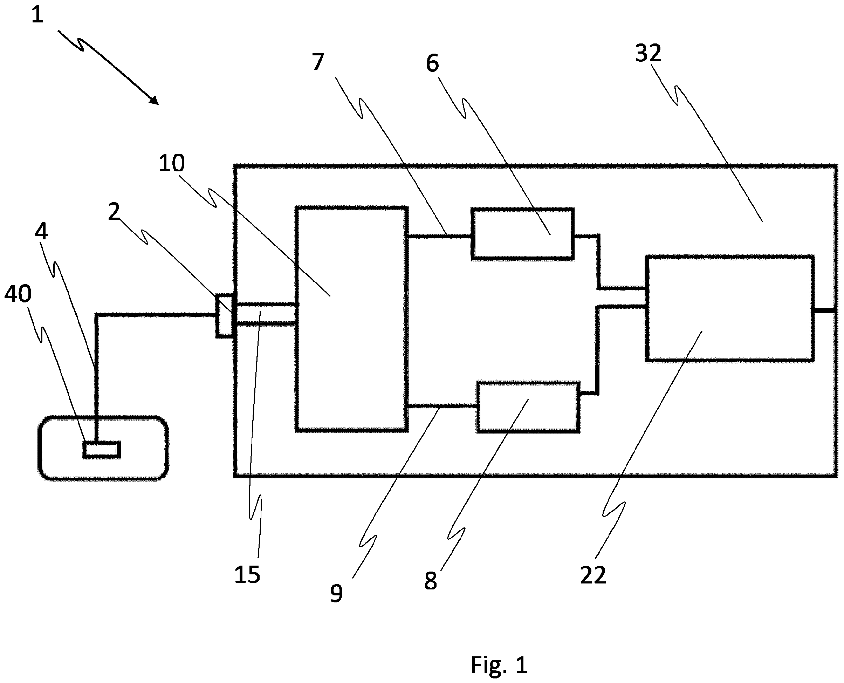

Fig. 1 shows an example of the TV signal processing unit 1 according to the present invention.

Reference number 2 indicates an input port for connecting to cable 4 for inputting TV signals into the TV signal processing unit. Cable 4 might be connected on the other side with an outlet 40, in particularly a TV signal outlet, wherein outlet 40 is preferably an usb type c. The input port 2 is preferably configured to input TV signals of a first TV signal type and a second TV signal type.

The input port 2 is preferably connected by means of a signal connection, in particularly wire or PCB, with a front-end switching unit 10, which preferably acts as signal detector and performs switching of signals. The front-end switching unit 10 is preferably connected via at least or exactly two signal connections 7, 9 with a first TV signal type processing unit 6 for processing TV signals of the first frequency range and for outputting said processed TV signals of a first frequency range as a first type of processed signals and a second TV signal type processing unit 8 for processing TV signals of the second frequency range and for outputting said processed TV signals of a second frequency range as a second type of processed signals. The first TV signal type processing unit 6 and the second TV signal type processing unit 8 are both connected to a system-on-a-chip unit 22. The SoC-unit 22 preferably demodulates the first type of processed TV signals and/or demodulates the second type of processed TV signals. The SoC unit 22 also causes outputting of demodulated TV signals based on the demodulated first type of processed TV signals or outputting of demodulated TV signals based on the demodulated second type of processed TV signals. The first TV signal type processing unit 6 is preferably a DVB-S electronical circuit. The second TV signal type processing unit 8 is preferably a DVB-T electronical circuit 8.

The front-end switching unit 10 can be a kind of smart switch which detects and then manipulate the broadcast signals towards related circuit. The front-end switching unit 10 preferably provides connectivity between broadcast signals respectively input port 2 and electronical circuit respectively SoC unit 22. When the source broadcast signals come from outlet 40 via only one cable 4, like a usb type-c cable, to front-end switching unit 10, it decides what kind of signal it is. For example, if the signals are DVB-S broadcast signal, it manipulates the signals towards DBV-S electronical circuit 6. Or in case the signals are DVB-T broadcast signal, it manipulates the signals towards DBV-T electronical circuit 8.

The SoC unit 22 is preferably a microcontroller. It is a highly integrated single chip TV solution for digital signals like DVBS and DVBT. It preferably comprises a demodulator for digital broadcast signals, in particularly for demodulating DVBS signals and/or DVBT signals. However, it is also possible that the SoC unit 22 comprises more than one demodulator in particularly two or exactly to demodulators, wherein one demodulator is preferably provided to demodulate DVBS signals and wherein one demodulator is preferably provided to demodulate DVBT signals. The SoC unit 22 preferably also comprises a video processor and an audio processor a combined video- and audio processor.

The first TV signal type processing unit 6 respectively DVBS circuit 6 mainly includes digital satellite single chip tv tuner. It takes DVBS signals from front-end switching unit 10 and arranges the frequency of the signal to send them to the SoC-unit 22, in particularly for demodulating.

The second TV signal type processing unit 8 respectively DVBT circuit 8 mainly includes digital single chip tv tuner for all terrestrial TV standards. It takes DVBT signals from front-end switching unit 10 and arranges the frequency of the signals to send them to the SoC-unit 22, in particularly for demodulating.

Mainly, the usb type-c connection network includes usb type-c sockets on outlet 40 and mainboard 32. So, the connection between the outlet 40 and mainboard 32 ensures via type-c cable 4. USB type-c is widely used. It's a single usb connector shape that most devices adopt. This is beneficial since end-users won't have to keep loads of different usb cables with different connector shapes for various devices. USB type-c cables can carry more signals than others, so they can be used to carry all broadcast signals. The mentioned usb type-c connection network is preferably a reversible usb type-c connector which makes plug insertion more user friendly. The technology offers a single platform connector carrying all the necessary broadcast data by using only one type-c cable 4.

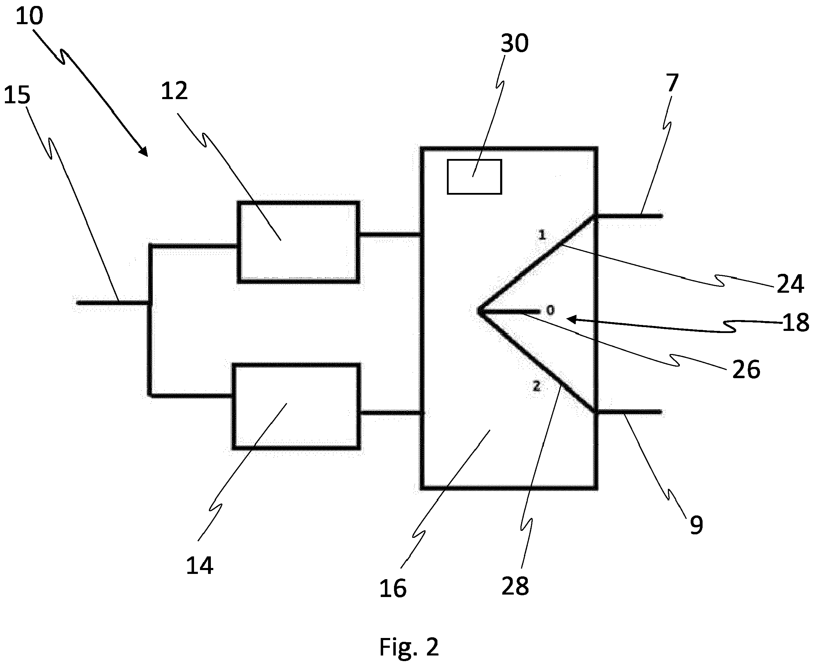

Fig. 2 shows an example of a front-end switching unit 10. Such a front-end switching unit 10 can be used in the TV signal processing unit shown in fig. 1.

Fig. 2 shows that the incoming signals 15, in particularly from usb type-c, are the front-end switching unit 10 input. Reference number 12 indicates a first band pass filter element and reference number 14 indicates a second band pass filter element. Band pass filter elements 12, 14 respectively band pass filter (BPFs) are designed to distinguish between TV signals, in particularly between DVBT or DVBS signals. Switching module 16 respectively smart switch 16 can manipulate the desired signal towards output 7 or 9 for tuner circuit 6 or 8 and SoC-unit 22.

BPF 12, 14 select the signal and switching module 16 respectively smart switching module manipulates the incoming signals according to frequency. And switching module 16 manipulates the desired output signal towards tuner 6 or 8.

The switching module 16 manipulates the signals according to frequency. The user selects the signal source by using respectively selecting from a TV software menu respectively set-top box software menu which shows sources, in particularly as DVBT and DVBS, on a user selection menu. The SoC-unit 22 and the front-end switching unit 10 can communicate each other by I2C protocol. Thus, a switching element 18 of the front-end switching unit 10 actuates the states 1 or 2 to connect a band pass filter element output to a TV signal type processing unit, in particularly DVBS or DVBT tuner circuit. The switching module 16 preferably has three states. State 0 defines an idle respectively default state. If the selected signal comes, the switching state changes in accordance with frequency and the communication between SoC-unit 22 and front-end switching unit 10.

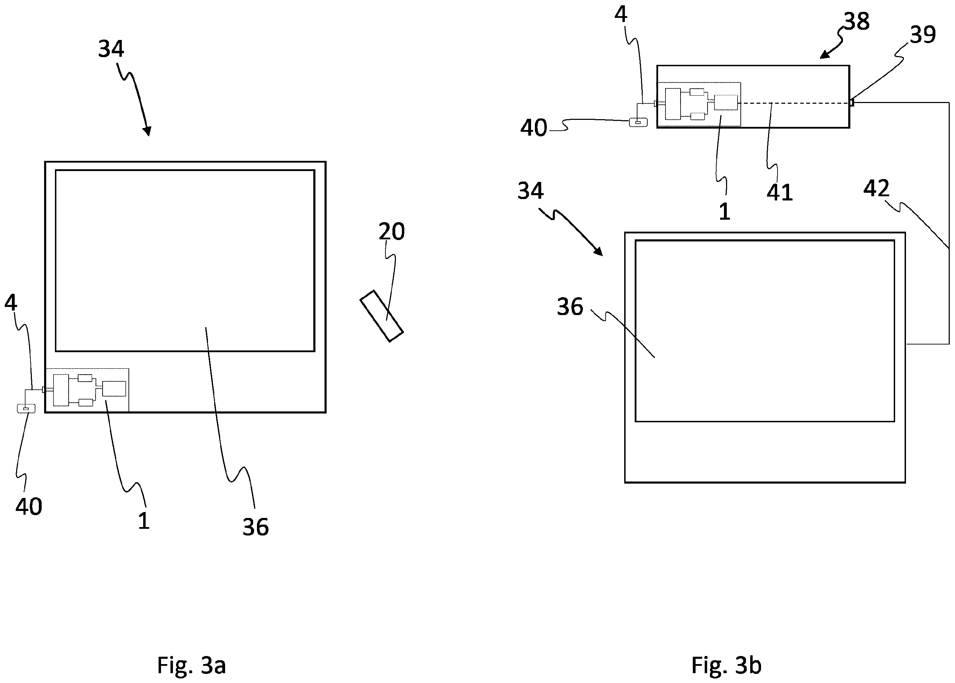

Fig. 3a shows a TV 34 (television) which comprises a TV signal processing unit according to the present invention. The TV comprises a display for displaying the signals demodulated by SoC-unit 22. Reference number 20 indicates a remote control. A user might provide channel or source switching commands by means of the remote control 20. The remote control 20 might be a mobile phone or a tablet PC.

Fig. 3b shows a set-top box 38 which comprises a TV signal processing unit according to the present invention. The set-top box 38 is connected via a set-top box to TV cable 42 with a TV for displaying the signals demodulated by the SoC-unit 22. Reference number 39 indicates an outlet port, wherein cable 42 can be connected to said outlet port. SoC-unit 22 and outlet port 39 are preferably connected with each other for exchanging signals, at least indirectly and preferably directly connected via line, in particularly wire or PCB.

Thus, the present invention refers to a TV signal processing unit 1. Said TV signal processing unit 1 comprises at least an input port 2 for connecting a cable 4 for inputting TV signals,
a first TV signal type processing unit 6 for processing TV signals of a first frequency range and for outputting said processed TV signals of the first frequency range as a first type of processed signals
a second TV signal type processing unit 8 for processing TV signals of a second frequency range and for outputting said processed TV signals of the second frequency range as a second type of processed signals
a front-end switching unit 10, wherein the front-end switching unit 10 comprises a first band pass filter element 12 for filtering TV signals of the first frequency range and a second band pass filter element 14 for filtering TV signals of the second frequency range and a switching module 16 for routing the TV Signals of the first frequency range from the first band pass filter element 12 to the first TV signal type processing unit 6 and for routing the TV Signals of the second frequency range from the second band pass filter element 14 to the second TV signal type processing unit 8, and a system-on-a-chip unit 22, for demodulating the first type of processed TV signals and for demodulating the second type of processed TV signals and for outputting demodulated TV signals based on the demodulated first type of processed TV signals or for outputting demodulated TV signals based on the demodulated second type of processed TV signals.

### LIST OF REFERENCE NUMBERS

- 1: TV signal processing unit
- 2: input port
- 4: cable
- 6: first TV signal type processing unit
- 7: first signal connection
- 8: second TV signal type processing unit
- 9: second signal connection
- 10: front-end switch unit
- 12: first band pass filter element
- 14: second band pass filter element
- 15: connection between first band pass filter element and second band pass filter element and input port
- 16: switching module
- 18: switching element
- 20: remote control
- 22: system-on-a-chip
- 24: first state
- 26: second state
- 28: third state
- 30: signal input element
- 32: main board
- 34: TV
- 36: display
- 38: set-top box
- 39: set-top box output port
- 40: source output port
- 41: line
- 42: set-top box to TV cable

## Claims

1. TV signal processing unit (1),
at least comprising
an input port (2) for connecting a cable (4) for inputting TV signals,
wherein the input port (2) is configured to input TV signals of a first TV signal type and a second TV signal type,
wherein the first TV signal type defines TV signal within a first frequency range,
wherein the second TV signal type defines TV signal within a second frequency range,
wherein the first frequency range and the second frequency range differ from each other,
a first TV signal type processing unit (6) for processing TV signals of the first frequency range and for outputting said processed TV signals of the first frequency range as a first type of processed signals
a second TV signal type processing unit (8) for processing TV signals of the second frequency range and for outputting said processed TV signals of the second frequency range as a second type of processed signals
a front-end switching unit (10),
wherein the front-end switching unit (10) comprises
a first band pass filter element (12) for filtering TV signals of the first frequency range
and
a second band pass filter element (14) for filtering TV signals of the second frequency range,
wherein the first band pass filter element (12) and the second band pass filter element (14) are both connected to the input port (2),
and
a switching module (16) for routing the TV Signals of the first frequency range from the first band pass filter element (12) to the first TV signal type processing unit (6) and for routing the TV Signals of the second frequency range from the second band pass filter element (14) to the second TV signal type processing unit (8),
wherein the switching module (16) comprises a switching element (18) for selectively routing the TV signals of the first frequency range from the first band pass filter element (12) to the first TV signal type processing unit (6) or for routing the TV Signals of the second frequency range from the second band pass filter element (14) to the second TV signal type processing unit (8),
wherein the switching element (18) is operatable in dependency of defined parameters, in particularly at least indirectly in dependency of commands inputted via a remote control (20),
a system-on-a-chip unit (SoC unit) (22),
for demodulating the first type of processed TV signals and for demodulating the second type of processed TV signals
and
for outputting demodulated TV signals based on the demodulated first type of processed TV signals or for outputting demodulated TV signals based on the demodulated second type of processed TV signals.

2. TV signal processing unit according to claim 1,
**characterized in that**
the first TV signal type processing unit (6) is a DVBT unit and wherein the second TV signal type processing unit (8) is a DVBS unit.

3. TV signal processing unit according to claim 1 or 2,
**characterized in that**
wherein the first frequency range is between 400MHz and 800MHz, in particularly between 474MHz and 786MHz, and wherein the second frequency range is between 850MHz and 2250MHz, in particularly between 950MHz and 2150MHz.

4. TV signal processing unit according to any of the preceding claims,
**characterized in that**
the SoC unit (22) and the front-end switching unit (10) communicate with each other by I2C protocol.

5. TV signal processing unit according to any of the preceding claims,
**characterized in that**
the switching module (16) has three states (24, 26, 28), wherein a first state (24) is a state in which signals outputted by the first band pass filter element (12) can be forwarded to the first TV signal type processing unit (6),
wherein a second state (26) is an idle state
and
wherein a third state (28) is a state in which signals outputted by the second band pass filter element (14) can be forwarded to the second TV signal type processing unit (8).

6. TV signal processing unit according to claim 5,
**characterized in that**
the front-end switching unit (10) comprises a signal input element (30) for inputting signals representing switching commands for establishing the first state or the second state.

7. TV signal processing unit according to any of the preceding claims,
**characterized in that**
the input port (2), the front-end switching unit (10), the first TV signal type processing unit (6) and the second TV signal type processing unit (8) and the SoC unit (22) are arranged and/or generated on one main board (32) or as parts of one main board (32).

8. TV signal processing unit according to any of the preceding claims,
**characterized in that**
the input port (2) is exactly one USB c-type input port for connecting to a USB c-type cable, wherein the first TV signal type and the second TV signal type are both insertable via the one USB c-type input port (2).

9. TV (34),
comprising a TV signal processing unit (1) according to any of claims 1 to 8,
wherein the TV (34) further comprises a display (36), wherein the display (36) is operatable in dependency of the demodulated TV signals based on the demodulated first type of processed TV signals or in dependency of the demodulated TV signals based on the demodulated second type of processed TV signals.

10. Set-top box (38),
comprising a TV signal processing unit (1) according to any of claims 1 to 8,
wherein the set-top box (38) further comprises at least one output port (40) for connecting to a TV (34),
wherein demodulated TV signals based on the demodulated first type of processed TV signals or demodulated TV signals based on the demodulated second type of processed TV signals are outputtable via the at least one output port.

11. Method for operating a TV signal processing unit (1),
at least comprising the steps:
inputting TV signals of a first TV signal type and/or a second TV signal type via an input port (2) into the TV signal processing unit (1),
wherein the first TV signal type defines TV signal within a first frequency range,
wherein the second TV signal type defines TV signal within a second frequency range,
wherein the first frequency range and the second frequency range differ from each other,
filtering TV signals of the first frequency range by means of a first band pass filter element (12) and
filtering TV signals of the second frequency range by means of a second band pass filter element (14),
routing the TV Signals of the first frequency range from the first band pass filter element (12) to a first TV signal type processing unit (6)
processing TV signals of the first frequency range by means of the first TV signal type processing unit (6) and
outputting said processed TV signals of the first frequency range as a first type of processed signals by means of the first TV signal type processing unit (6),
demodulating the first type of processed TV signals
and
outputting demodulated TV signals based on the demodulated first type of processed TV signals.

12. Method for operating a TV signal processing unit (1),
at least comprising the steps:
inputting TV signals of a first TV signal type and/or a second TV signal type via an input port (2) into the TV signal processing unit (1),
wherein the first TV signal type defines TV signal within a first frequency range,
wherein the second TV signal type defines TV signal within a second frequency range,
wherein the first frequency range and the second frequency range differ from each other,
filtering TV signals of the first frequency range by means of a first band pass filter element (12) and
filtering TV signals of the second frequency range by means of a second band pass filter element (14),
routing the TV signals of the second frequency range from the second band pass filter element (14) to the second TV signal type processing unit (8),
processing TV signals of the second frequency range by means of the second TV signal type processing unit (8) and
outputting said processed TV signals of the second frequency range as a second type of processed signals by means of the second TV signal type processing unit (8),
demodulating the second type of processed TV signals
and
outputting demodulated TV signals based on the demodulated second type of processed TV signals.

13. Method according to claim 11 or 12,
further comprising the step:
generating signals representing a user input, wherein the signals represent channel switching commands and/or source switching commands, wherein a front-end switching unit (10) switches in dependency of the channel switching commands and/or source switching commands between two routing schemes,
wherein according to a first routing scheme the TV Signals of the first frequency range are routed from a first band pass filter element (12) to a first TV signal type processing unit (6) and
wherein according to a second routing scheme the TV Signals of the second frequency range are routed from a second band pass filter element (14) to a second TV signal type processing unit (8).

14. Method according to any of claims 11 to 13,
**characterized in that**
the generated signals representing the user input are generated by means of a remote control (22).

15. Computer program product comprising commands which cause TV signal processing unit (1) according to claim 1 or the TV (34) according to claim 9 or the set-top box (38) according to claim 10 to execute the method steps according to claim 11 or 12.
